# EUROPEAN PATENT APPLICATION

(11) **EP 1 628 472 A1**
(43) Date of publication of application: **22.02.2006**
(21) Application number: 05106719.7
(22) Date of filing: 21.07.2005
(51) Int. Cl.: H04N 5/225

(54) **Imaging apparatus**

(30) Priority: 16.08.2004 KR 2004064266
(71) Applicant: SAMSUNG ELECTRONICS CO., LTD., Suwon-si, Gyeonggi-do 442-742 (KR)
(72) Inventor: Hong, Sung-bin 435-1201, Khonme-maeul, Jukjeon 1-dong Yongin-si Gyeonggi-do (KR)
(74) Representative: Walaski, Jan Filip

(57) **Abstract**

A combination imaging apparatus using a reflector and method are provided. The present combination imaging apparatus and method comprise a lens assembly for forming an optical image corresponding to a subject, and first and second charge-coupled devices (CCDs) each for converting the optical image into an electrical image signal. The apparatus and method further comprise a reflector for changing an optical path of light incident through the lens assembly and forming an optical image on any of the first and second CCDs, and a circuit part for processing, reproducing, and storing the converted optical image of any of the first and second CCDs. Accordingly, the combination imaging apparatus can capture high-quality moving pictures and still images using a single lens assembly.

## Description

The present invention relates generally to imaging apparatus. More particularly, but not exclusively, the present invention relates to a combination imaging apparatus using a reflector, which is capable of forming optical images on a charge-coupled device (CCD) suitable for moving pictures and/or a CCD suitable for still images, by changing an optical path of light incident through a lens assembly.

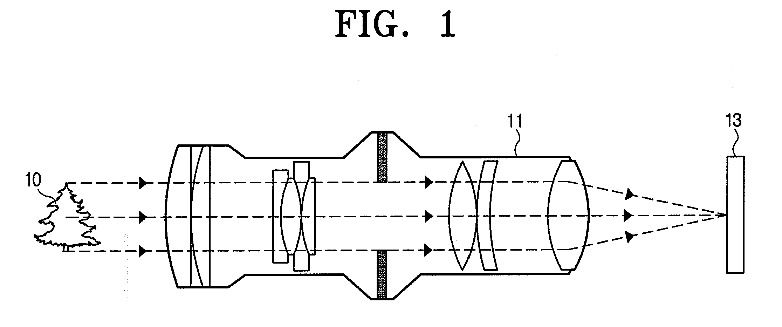

Figure 1 is a view of a lens assembly and a charge-coupled device (CCD) unit of a general imaging apparatus. In Figure 1, the image of a subject 10 is formed on a CCD unit 13 through a lens assembly 11. A moving-picture imaging apparatus such as a camcorder uses a CCD that is particularly suitable for movies, for example an interlace CCD 13, to enhance moving-picture quality. A still image-capturing apparatus such as a still camera uses a CCD that is particularly suitable for still images, for example a progressive scan CCD 13, to enhance still image quality. When the movie CCD is used to capture moving pictures and still images, the quality of the captured still images deteriorates. When the still image CCD is used to capture both moving images and still images, the quality of the captured moving images deteriorates. In order to reduce the deterioration, a combination imaging apparatus, also known as a 'Duo CAM' is used, having a CCD for both movies and still images.

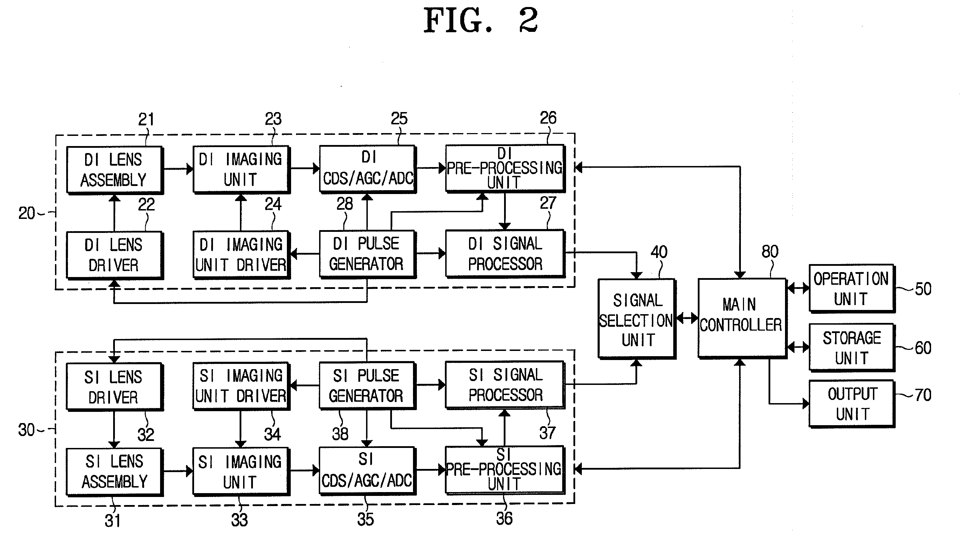

Figure 2 is a block diagram of a conventional combination imaging apparatus. In Figure 2, the conventional combination imaging apparatus has a moving-picture imaging unit 20, a still image-capturing unit 30, a signal selection unit 40, an operation unit 50, a storage unit 60, an output unit 70, and a main control unit 80.

The moving-picture imaging unit 20 includes a dynamic image (DI) lens assembly 21, a DI lens driver 22, a DI imaging unit 23, a DI imaging unit driver 24, a DI Correlated Double Sampling (CDS)/ Auto Gain Control (AGC)/ Analog-to-Digital converter (ADC) 25, a DI pre-processing unit 26, a DI signal processor 27, and a DI pulse generator 28.

The DI lens assembly 21 receives light reflected from a subject and forms on the DI imaging unit 23 an optical image corresponding to the subject. The DI lens driver 22 drives each part of the DI lens assembly 21, and focuses light to form an image on the DI imaging unit 23.

The DI imaging unit 23 converts an optical image formed through the DI lens assembly 21 into an electric image signal field by field. The DI imaging unit driver 24 receives Timing and Sync signals supplied from the DI pulse generator 28, converts the Timing and Sync signals into a voltage level suitable to read data, and drives the DI imaging unit 23.

The DI CDS/AGC/ADC 25 removes noise from the image signal output from the DI imaging unit 23 by using the Correlated Double Sampling, amplifies a level of the image signal by using the auto gain control, and converts the image signal into a digital image signal by using the analog-to-digital converter.

The DI pre-processing unit 26 receives the digital image signal from the DI CDS/AGC/ADC 25, and splits the digital image signal into a luminance signal and a color signal. The DI pre-processing unit 26 calculates color distribution, charge saturation amount, auto focus (AF), and so on, from the digital image signal, and uses the calculations to drive the DI lens assembly 21.

The DI signal processor 27 displays on a screen such as a liquid crystal display (LCD) or processes the image signals split into the luminance signal and the color signal to be output to an external device such as a monitor, TV, or the like. The DI pulse generator 28 supplies pulses necessary to operate the DI lens driver 22, the DI imaging unit 23, the DI CDS/AGC/ADC 25, the DI pre-processing unit 26, and the DI signal processor 27.

The still image-capturing unit 30 includes a still image (SI) lens assembly 31, a SI lens driver 32, a SI imaging unit 33, a SI imaging unit driver 34, a SI CDS/AGC/ADC 35, a SI pre-processing unit 36, a SI signal processor 37, and a SI pulse generator 38.

The SI lens assembly 31 receives light reflected from a subject to be taken and forms on the SI imaging unit 33 an optical image corresponding to the subject. The SI lens driver 32 drives each part of the SI lens assembly 31, and focuses light to form an image on the SI imaging unit 33.

The SI imaging unit 33 converts an optical image formed through the SI lens assembly 31 into an electrical image signal frame by frame. The SI imaging unit driver 34 receives Timing and Sync signals supplied from the SI pulse generator 38, converts the Timing and Sync signals into a voltage level suitable to read data, and drives the SI imaging unit 33.

The SI CDS/AGC/ADC 35 removes noise from the image signal output from the SI imaging unit 33 by using the Correlated Double Sampling, amplifies a level of the image signal by using the auto gain control, and converts the image signal into a digital image signal by using the analog-to-digital converter.

The SI pre-processing unit 36 receives the digital image signal from the SI CDS/AGC/ADC 35, and splits the digital image signal into a luminance signal and a color signal. The SI pre-processing unit 36 calculates color distribution, charge saturation amount, auto focus (AF), and so on, from the digital image signal, and uses the calculations to drive the SI lens assembly 31.

The SI signal processor 37 displays on a screen such as an LCD or processes the image signals split into the luminance signal and the color signal to be output to an external device such as a monitor, TV, or the like. The SI pulse generator 38 supplies pulses necessary to operate the SI lens driver 32, the SI imaging unit 33, the SI CDS/AGC/ADC 35, the SI pre-processing unit 36, and the SI signal processor 37.

The signal selection unit 40 selects one of the moving-picture signal and the still-image signal under the control of the main controller 80. The operation unit 50 is a user interface for receiving operation commands by a user that are related to the function selections and operation controls of the combination imaging apparatus. The storage unit 60 has a memory driver (not shown) and a memory unit (not shown) such as a memory card, a memory stick, and a hard disc drive (HDD) for storing moving pictures and still images. The output unit 70 displays an image signal being captured, or displays an image signal stored in the storage unit 60.

The main controller 80 receives an operation command from a user through the operation unit 50, and controls the overall operations of the combination imaging apparatus to capture moving pictures and still images. That is, the main controller 80 controls the moving-picture imaging unit 20 and the still image-capturing unit 30 based on the user's command, and controls the signal selection unit 40 to select one of the moving-picture signal and the still-image signal.

The conventional combination imaging apparatus needs two lens assemblies and imaging units, so two lens drivers and imaging unit drivers are needed to drive the lens assemblies and the imaging units as well. Furthermore, the circuits for lens driving and image processing become complicated. This provides an obstacle to device miniaturization as well as increasing the complexity for the user.

The present invention aims to address the above problems.

According to the invention, there is provided an imaging apparatus comprising a lens assembly for forming an optical image of a subject, first and second charge coupled devices for providing an electrical signal corresponding to the image and a reflector arranged such that the image is selectably formed on one of the first and second charge coupled devices.

Accordingly, an aspect of the present invention is to provide a combination imaging apparatus and method capable of capturing moving pictures and still images by using a reflector for changing an optical path of light incident through one lens assembly and by forming an optical image on a charge-coupled device (CCD) for movies and a CCD for still images.

According to the invention there is further provided a combination imaging apparatus, comprising a lens assembly for forming an optical image corresponding to a subject; first and second charge-coupled devices (CCDs) each for converting the optical image into an electrical image signal; a reflector for changing an optical path of light incident through the lens assembly and forming an optical image on any of the first and second CCDs; and a circuit part for processing, reproducing, and storing the converted optical image of any of the first and second CCDs.

The reflector changes a tilt of an axis of the light incident through the lens assembly to change an optical path of the light.

The combination imaging apparatus further comprises a focusing lens for forming the optical image on any of the first and second CCDs by preventing the changed light from being scattered.

If the optical image is left-right-reversed by the reflector, formed on the first and second CCDs, and converted into the electrical image signal, the circuit part converts the electrical image signal into an electrical image signal corresponding to a normal image.

One of the first and second CCDs is a CCD for movies, and the other is a CCD for still images.

Another aspect of the present invention is to provide an image-capturing method for a combination imaging apparatus having a first CCD, a second CCD, and a lens assembly, comprising steps of (a) positioning a reflector for changing an optical path of light incident through a lens assembly; (b) changing by the reflector the optical path of the light to form an optical image of a subject on any of the first and second CCDs; (c) converting the optical image into an electrical image signal; and (d) processing, reproducing, and storing the converted electric image signal.

In the step (b), the reflector tilts an axis of the light incident through the lens assembly to change the optical path of the light, and the reflector prevents scattering of the light traveling along the changed optical path to form the optical image on either of the first and second CCDs.

If the optical image is left-right-reversed by the reflector, formed on any of the first and second CCDs, and converted into the electrical image signal, the step of processing the electrical image signal converts the electrical image signal into an electrical image signal corresponding to the normal image.

One of the first and second CCDs is a CCD for movies and the other is a CCD for still images.

Embodiments of the invention will now be described by way of example with reference to the accompanying drawings, in which:
Figure 1 illustrates a structure of a conventional lens assembly and an imaging unit of a general imaging apparatus;
Figure 2 is a block diagram of a conventional combination imaging apparatus;
Figure 3 is a block diagram of a combination imaging apparatus according to an embodiment of the present invention;
Figure 4A illustrates optical image formation on a first CCD of the combination imaging apparatus of Figure 3;
Figure 4B illustrates optical image formation on a second CCD of the combination imaging apparatus of Figure 3;
Figure 5 illustrates operations of an imaging unit of the combination imaging apparatus of Figure 3;
Figure 6A illustrates an optical image formed on the first CCD of the combination imaging apparatus of Figure 3; and
Figure 6B illustrates an optical image formed on the second CCD of the combination imaging apparatus of Figure 3.

Throughout the drawings, like reference numbers will be understood to refer to like elements, features and structures.

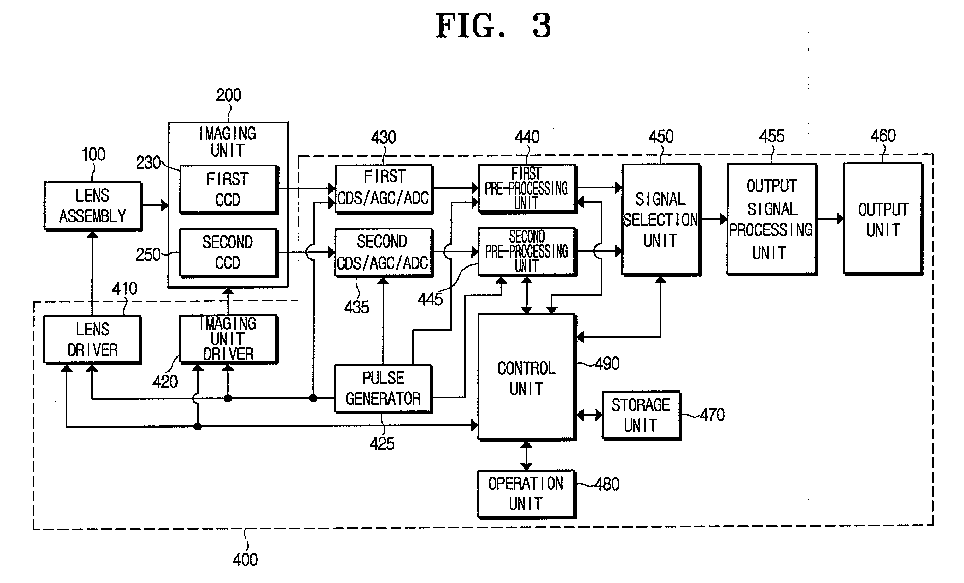

Figure 3 is a block diagram of a combination imaging apparatus according to an embodiment of the present invention. In Figure 3, the combination imaging apparatus includes a lens assembly 100, an imaging unit 200, and a circuit 400. The lens assembly 100 receives light reflected from a subject. The light incident through the lens assembly 100 forms an optical image on the imaging unit 200. The imaging unit 200 includes a first charge-coupled device (CCD) 230 and a second CCD 250. The first and second CCDs 230 and 250 have optical images formed thereon, and convert the optical images into electrical image signals.

The circuit 400 includes a lens driver 410, an imaging unit driver 420, a pulse generator 425, a first Correlated Double Sampling (CDS)/ Auto Gain Control (AGC)/Analog to Digital Converter (ADC) 430, a second CDS/AGC/ADC 435, a first pre-processing unit 440, a second pre-processing unit 445, a signal selection unit 450, an output signal processing unit 455, an output unit 460, a storage unit 470, an operation unit 480, and a control unit 490.

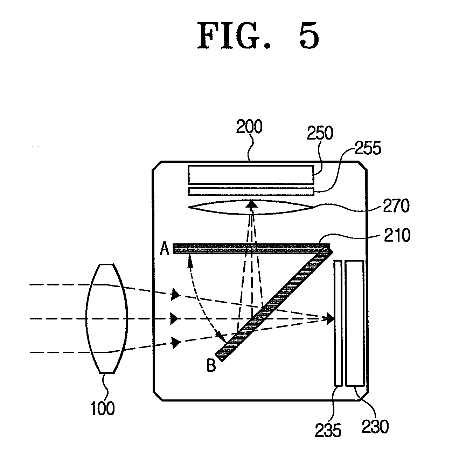

The lens driver 410 drives each part of the lens assembly 100 under the control of the control unit 490 which will be described below. The imaging unit driver 420 receives Timing and Sync signals from the pulse generator 425, drives the imaging unit 200 by converting the signals into a suitable voltage level for reading data from the imaging unit 200. The reflector 210 is driven according to user's manipulations when a user wants to electrically drive the reflector 210 which will be described below in detail in Figure 5.

The first and second CDS/AGC/ADC 430 and 435 remove noise from the image signal output from the imaging unit 200 by using the Correlated Double Sampling (CDS), amplifies a level of the image signal by using the auto gain control (AGC), and converts the image signal into a digital image signal by using the analog-to-digital converter (ADC).

The first and second pre-processing units 440 and 445 receive a digital image signal from the first and second CDS/AGC/ADC 430 and 435, and split the digital image signal into a luminance signal and a color signal. The first and second pre-processing units 440 and 445 calculate and use color distribution, charge saturation amount, auto focus (AF), and so on, to drive each part of the lens assembly 100.

The pulse generator 425 generates and supplies Time and Sync signals necessary for parts of the combination imaging apparatus such as the lens driver 410, the imaging unit driver 420, the first CDS/AGC/ADC 430, the second CDS/AGC/ADC 435, the first pre-processing unit 440, and the second pre-processing unit 445.

The signal selection unit 450 selects one of a moving-picture signal and a still image signal under the control of the control unit 490. The storage unit 470 has a memory unit (not shown) such as a memory card, a memory stick, a hard disc drive, and so on, and a memory unit driver (not shown) having moving pictures and still images stored into the memory unit. The operation unit 480 is a user interface unit for receiving user's operation commands relating to function selections and operation controls of the combination imaging apparatus.

The output signal processing unit 455 processes an image signal split into a luminance signal and a color signal to display the image signal on a screen such as an LCD, or to output the image signal to an external device such as a monitor, TV, and the like. The output unit 460 displays captured images, or displays or outputs an image signal stored in the storage unit 470 according to user's manipulations.

The control unit 490 receives user operation commands through the operation unit 480, and controls the overall operations of the combination image apparatus to capture moving pictures and still images. That is, the control unit 490 controls the signal selection unit 450 to select one of the moving-picture signal and the still-image signal according to a user's operation command. The control unit 490 controls the lens driver 410 to drive the lens assembly 100 based on the color distribution, charge saturation amount, auto focus (AF), and so on, that are calculated from the first and second pre-processing units 440 and 445. The calculated color distribution is used to adjust white balance based on red, blue, and green, and the charge saturation amount is used to adjust brightness and depth of field. The auto focus (AF) is used to automatically focus on a subject.

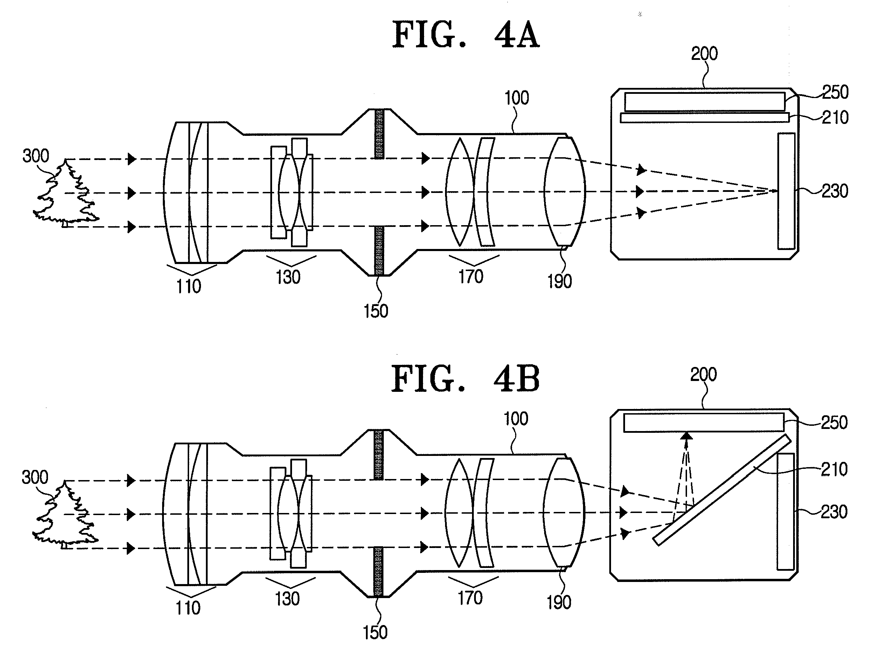

Figure 4A is a view of an optical image formation on a first CCD of the combination imaging apparatus of Figure 3. In Figure 4A, the lens assembly 100 of the combination imaging apparatus includes fixed lenses 110 and 170, a zoom lens 130, an iris 150, and a focus lens 190.

The zoom lens provides for magnification of the image in a way that is well known per se.

The iris 150 adjusts an amount of light incident through the fixed lens 110 and the zoom lens 130 to control the brightness, the depth of field, and so on. If the iris 150 is adjusted to be wider to allow more light, a brighter optical image is obtained and the depth of field is decreased. On the contrary, if the iris 150 is narrowed to reduce the amount of light, the optical image becomes less bright and the depth of field is increased.

The focus lens 190 focuses light from the subject 300 to form a clear optical image on the imaging unit 200.

The imaging unit 200 of the combination imaging apparatus has the reflector 210, the first CCD 230, and the second CCD 250. The reflector 210 changes an optical path of the light incident through the lens assembly 100 in order for the light to converge in the direction of a CCD on which the image is to be formed. The first and second CCDs 230 and 250 convert an optical image incident and formed through the lens assembly 100 into an electrical image signal. Figure 4A shows the conversion of an optical image formed on the first CCD 230 into an electrical image signal.

Figure 4B is a view of the formation of an optical image on the second CCD 250 of the combination imaging apparatus of Figure 3. In Figure 4B, an optical image of the subject 300 incident through the lens assembly 100 is reflected by the reflector 210, formed on the second CCD 250, and converted into an electrical image signal.

In Figures 4A and Figure 4B, a CCD for movies can be used as the first CCD 230, and a CCD for still images can be used as the second CCD 250. Otherwise, the CCD for still images can be used as the first CCD 230, and the CCD for movies can be used as the second CCD 250. The CCD for still images is suitable for capturing still images and generates an image signal frame by frame in accordance with progressive scan techniques, and the CCD for movies is suitable for capturing moving pictures and generates an image signal field by field in accordance with interlace scan techniques.

Figure 5 is a view of operations of an imaging unit of the combination imaging apparatus of Figure 3. In Figure 5, the imaging unit 200 has a reflector 210, a first CCD 230, a first optical low pass filter (LPF) 235, a second CCD 250, a second optical LPF 255, and a focusing lens 270.

The reflector 210 changes an optical path of light to form an optical image on the first CCD 230 or the second CCD 250 according to the selection of a user. The reflector 210 can be changed manually by a user from a position A to a position B, or automatically by electronic means such as a motor and the like. The reflector 210 is, for example, electrically operated by the imaging unit driver 420. The imaging unit driver 420 is controlled by the control unit 490 receiving user manipulation through the operation unit 480. The reflector 210 moves from the position A to the position B shown in Figure 5. In position B, it is tilted to an angle of about 45 degrees with respect to the axis of the incident light.

The first and second optical LPFs 235 and 255 pass light incident from the lens assembly 100 and having frequencies lower than a predetermined frequency, and cut off light having frequencies higher than the predetermined frequency. That is, the first and second optical LPFs 235 and 255 pass only the visible light, and cut off the infrared light to form optical images on the first and second CCDs 230 and 250, respectively.

The light passing through the first and second optical LPFs 235 and 255 forms optical images on the first and second CCDs corresponding to a subject, and the optical images are converted into electrical image signals by the first and second CCDs 230 and 250. The focusing lens 290 prevents the light reflected by the reflector 210 from being scattered so as to form an optical image on the second CCD 250. When the focusing lens 290 is used, high-quality images can be output through the second CCD 250.

If the reflector 210 is located at the position A, the light focused through the lens assembly 100 passes through the first optical LPF 235 and forms an optical image on the first CCD 230, which converts the optical image into an electrical image signal. If the reflector 210 is located on the position B, the light focused through the lens assembly 100 changes its traveling direction due to the reflector 210. The light in the changed direction is focused through the focusing lens 270, passes through the second optical LPF 255 and forms an optical image on the second CCD 250, which converts the optical image into an electrical image signal.

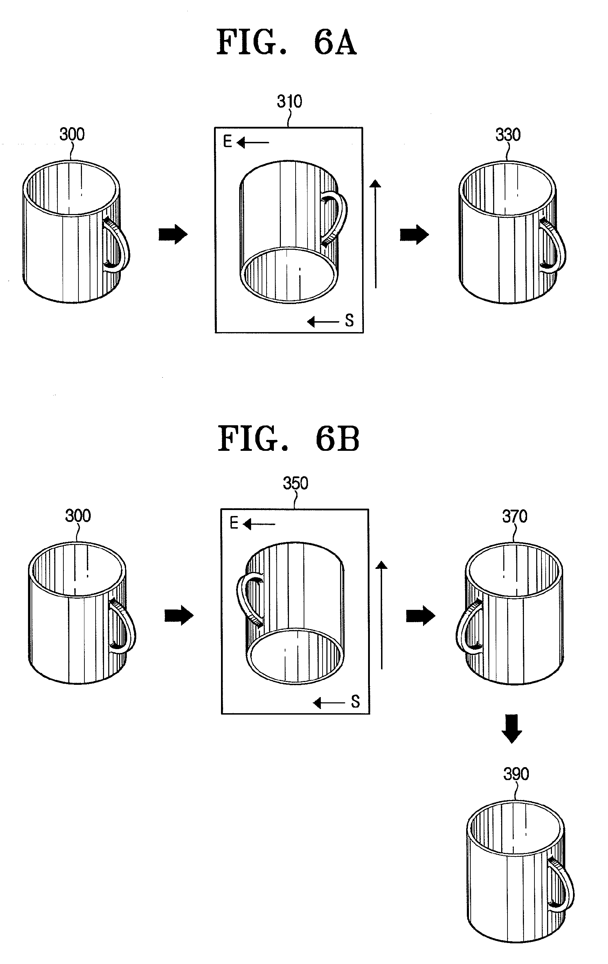

Figure 6A is a view of the formation of an image on the first CCD of the combination imaging apparatus of Figure 3. In Figure 6A, light reflected from the subject 300 focuses on the first CCD 230 to form an optical image that is upside down while passing through the lens assembly 100. The upside-down optical image 310 is converted by the first CCD 230 into an electrical image signal corresponding to the normal optical image 330. The photoelectric conversion is carried out from a start point S to an end point E in order with respect to data corresponding to the optical image 310 formed on the first CCD 230 in the same manner as conventional methods, and generates an electrical image signal corresponding to the normal optical image 330.

Figure 6B is a view of the formation of an optical image on the second CCD of the combination imaging apparatus of Figure 3. In Figure 6B, an optical image of the subject 300 is turned upside down while the light from the subject 300 passes through the lens assembly 100, and the upside-down optical image is reversed left and right by the reflector 210 again, and the left-right-reversed optical image is formed on the second CCD 250. The upside-down and left-right-reversed optical image 350 is converted by the second CCD 250 into an electrical image signal corresponding to the left-right-reversed optical image 370. That is, the photoelectric conversion is carried out from a start point S to an end point E in order with respect to data corresponding to the optical image 350 formed on the second CCD 250, and generates an electrical image signal corresponding to the left-right-reversed optical image 370. A portion of the apparatus for processing an image signal at the rear stage of the second CCD 250 reverses the left and right of the left-right-reversed optical image 370, and generates an image signal corresponding to the normal optical image 390. Such an image signal processing can be carried out at the second CDS/AGC/ADC 435, the second pre-processing unit 445, or the output signal processing unit 455.

Embodiments of the present invention can miniaturize the combination imaging apparatus and simplify the construction of its entire system circuitry by using a reflector capable of changing a path of the light for an optical image that is incident through one lens assembly to form the optical image on a CCD suitable for movies and a CCD suitable for still images and by capturing high-quality moving pictures and still images through one combination imaging apparatus.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. An imaging apparatus comprising:
a lens assembly (100) for forming an optical image of a subject;
first and second charge coupled devices (230, 250) for providing an electrical signal corresponding to the image; and
a reflector (210) arranged such that the image is selectably formed on one of the first and second charge coupled devices.

2. An imaging apparatus according to claim 1, wherein the reflector is movable between a first position in which the image is formed on the first charge coupled device (230) and a second position in which the image is formed on the second charge coupled device (250).

3. A combination imaging apparatus, comprising:
a lens assembly for forming an optical image corresponding to a subject;
first and second charge-coupled devices (CCDs) each for converting the optical image into an electrical image signal;
a reflector for changing an optical path of light incident through the lens assembly and forming an optical image on any of the first and second CCDs; and
a circuit part for processing, reproducing, and storing the converted optical image of any of the first and second CCDs.

4. The combination imaging apparatus as claimed in claim 3, wherein the reflector changes a tilt of an axis of the light incident through the lens assembly to change an optical path of the light.

5. The combination imaging apparatus as claimed in claim 3, further comprising a focusing lens for forming the optical image on any of the first and second CCDs by preventing the changed light from being scattered.

6. The combination imaging apparatus as claimed in claim 3, wherein, if the optical image is left-right-reversed by the reflector, formed on the first and second CCDs, and converted into the electrical image signal, the circuit part converts the electrical image signal into an electrical image signal corresponding to a normal image.

7. The combination imaging apparatus as claimed in claim 3, wherein one of the first and second CCDs is a CCD for movies, and the other is a CCD for still images.

8. A image-capturing method for a combination imaging apparatus having a first charge-coupled device (CCD), a second CCD, and a lens assembly, comprising steps of:
(a) positioning a reflector for changing an optical path of light incident through a lens assembly;
(b) changing by the reflector the optical path of the light to form an optical image of a subject on any of the first and second CCDs;
(c) converting the optical image into an electrical image signal; and
(d) processing, reproducing, and storing the converted electrical image signal.

9. The image-capturing method as claimed in claim 8, wherein, in the step (b), the reflector tilts an axis of the light incident through the lens assembly to change the optical path of the light.

10. The image-capturing method as claimed in claim 8, wherein, in the step (b), the reflector prevents from being scattered the light traveling along the changed optical path to form the optical image on any of the first and second CCDs.

11. The image-capturing method as claimed in claim 8, wherein, if the optical image is left-right-reversed by the reflector, formed on any of the first and second CCDs, and converted into the electrical image signal, the step (d) converts the electrical image signal into an electrical image signal corresponding to the normal image.

12. The image-capturing method as claimed in claim 8, wherein one of the first and second CCDs is a CCD for movies, and the other is a CCD for still images.
